# EUROPÄISCHE PATENTANMELDUNG

(11) **EP 0 973 282 A1**
(43) Veröffentlichungstag der Anmeldung: **19.01.2000**
(21) Anmeldenummer: 98113421.6
(22) Anmeldetag: 17.07.1998
(51) Int. Cl.: H04B 15/02, H01R 13/66, H01R 43/16

(54) **Herstellung von Netzfiltern**

(71) Anmelder: Electro-Terminal GmbH, 6022 Innsbruck (AT)
(72) Erfinder: Abenthung, Johannes, 6020 Innsbruck (AT); Fehle, Gerhard, 6020 Innsbruck (AT)
(74) Vertreter: Schmidt-Evers, Jürgen, Dipl.-Ing.

(57) **Zusammenfassung**

Ein Verfahren zur Herstellung von Netzfiltern soll durch einen großen Anteil an Gleichteilen eine Kosten- und Arbeitsersparnis bei der Herstellung von Netzfiltern verschiedener Typen aufgrund der dadurch erhöhten Stückzahlen ermöglichen. Gemäß dem Verfahren werden Metallbasisteile 30 hergestellt, die zur Verwendung von wenigstens einem kapazitiven und einem induktiven Netzfiltertyp verwendet werden können. Die Metallbasisteile 30 weisen an einem Ende jeweils eingangsseitige Anschlüsse 3, 4 und an dem davon abgewandten Ende jeweils ausgangsseitige Anschlüsse 8, 9 auf. Jeweils ein eingangsseitiger Anschluß 3, 4 ist mit einem ausgangsseitigen Anschluß 8, 9 über einen Leiter 31 elektrisch verbunden. Für den Fall, daß ein Netzfilter 1 des Induktivtyps hergestellt werden soll, dessen Filterschaltung eine serielle Verbindung von induktiven Bauteilen erfordert, werden wenigstens zwei Leiter des mit 31 eines Metallbasisteils 30 jeweils zwischen ihren eingangsseitigen Anschlüssen 3, 4 und ihren ausgangsseitigen Anschlüssen 8, 9 unterbrochen (32). Dann können induktive Bauteile 33 seriell zur Überbrückung der Unterbrechung 32 verbunden werden. Für den Fall, daß ein Netzfilter 1 des Kapazitätstyps hergestellt werden soll, werden Bauteile, wie beispielsweise Widerstände 34 oder Kondensatoren 35, 36, 37 zwischen einem ersten Leiter 31, der einen ersten eingangsseitigen Anschluß 3 mit einem ersten ausgangsseitigen Anschluß 8 verbindet, und einem zweiten Leiter 31 des Metallbasisteils 30, der einen zweiten eingangsseitigen Anschluß 4 mit einem zweiten ausgangsseitigen Anschluß 9 verbindet, parallel verbunden. Gemäß der Erfindung kann zur Verbindung von Bauteilen mit den entsprechenden Leitern 31 des Metallbasisteils 30 insbesondere eine Schneid- und Klemmtechnik verwendet werden.

## Beschreibung

Die vorliegende Erfindung bezieht sich auf ein Verfahren zur Herstellung von Netzfiltern für Elektrogeräte.

Hochfrequente elektromagnetische Schwingungen, die z. B. in Spannungen mit steilen Spannungsanstiegen enthalten sind, können eine Signalübertragung stören. Derartige Schwingungen werden beispielsweise unbeabsichtigt durch Motoren mit Kohlebürsten, Schalter und Thyristoren hervorgerufen. Störquellen sind also beispielsweise elektrische Betriebsmittel zum Schalten von Spannungen sowie Betriebsmittel zum Erzeugen hochfrequenter Spannungen. Zur Entstörung werden Netzfilter verwendet, die allgemein mehrere Tiefpässe aufweisen und dicht am störenden Betriebsmittel angeschlossen werden.

Selbstverständlich müssen die Netzfilter unter mehreren Gesichtspunkten an Umgebungsbedingungen angepaßt werden. Um das Netzfilter einerseits an das zu entstörende Elektrogerät und andererseits an die Netzverhältnisse (Spannungen, Frequenz) anzupassen, unter denen das Elektrogerät mit einer Netzspannung versorgt werden soll, muß insbesondere die interne Filterschaltung des Netzfilters angepaßt werden. Einerseits ist dabei grundsätzlich zwischen verschiedenen Filtertypen zu unterscheiden, wie beispielsweise dem rein kapazitiven sowie dem induktiv/kapazitiven Netzfiltertyp. Darüber hinaus müssen die Kennwerte der Bauelemente der Filterschaltung, wie beispielsweise die Widerstandswerte, die Kapazitäten und die Induktivitäten der entsprechenden Bauteile für eine entsprechende Abstimmung der internen Filterschaltung angepaßt werden. Aus den oben genannten verschiedenen Arten an Filtertypen ergibt sich u. a. auch ein unterschiedlicher Platzbedarf für die entsprechenden internen Filterschaltungen. In der Regel weisen z. B. Netzfilter vom induktiv/kapazitiven Typ einen höheren Platzbedarf als rein kapazitive Netzfiltertypen auf, der sich aus den für diesen Netzfiltertyp notwendigen Spulen und einem zwischen Spulen liegenden Kern ergibt.

Aus dieser großen Anzahl an verschiedenen Netzfiltertypen, die also verschiedene Typen an Filterschaltungen, verschiedene Bauelemente der Filterschaltungen sowie unterschiedlich große Gehäuse entsprechend dem unterschiedlichen Platzbedarf der Netzfiltertypen zur Folge haben, ergeben sich natürlich kostenmäßige Nachteile in der Produktion von Netzfiltern. Aufgrund der großen Anzahl unterschiedlicher Netzfilter sinken die entsprechenden Stückzahlen der einzelnen Netzfiltertypen einschließlich der dafür notwendigen Gehäuse, was die Kosten der Produktion deutlich ansteigen läßt.

Es ist daher Aufgabe der vorliegenden Erfindung, ein Verfahren zur Herstellung von Netzfiltern für Elektrogeräte bereit zu stellen, das eine kostengünstigere Herstellung verschiedener Typen an Netzfiltern ermöglicht.

Zentraler Gedanke der Erfindung ist es dabei, bei der Herstellung von Netzfiltern für verschiedene Netzfiltertypen einen möglichst großen Anteil Gleichteilen zu verwenden, der für verschiedene Netzfiltertypen gemeinsam verwendet werden kann. Insbesondere ein Metallbasisteil soll einheitlich für verschiedene Netzfiltertypen verwendbar sein, so daß die Entscheidung, welcher Netzfiltertyp hergestellt werden soll, erst getroffen werden muß, wein das Metallbasisteil bspw. in einem Gehäuse montiert einheitlich für verschiedene Netzfiltertypen und daher vorteilhafterweise in großer Stückzahl bereitgestellt ist.

Gemäß der vorliegenden Erfindung ist daher ein Verfahren zur Herstellung von Netzfiltern vorgesehen. Dabei werden Metallbasisteile hergestellt, die zur Herstellung von wenigstens einem kapazitiven und einem induktiven Netzfiltertyp verwendet werden. Diese Metallbasisteile fördern also dadurch eine Kostenersparnis bei der Herstellung von Netzfiltern, daß sie mit entsprechend großer Stückzahl für verschiedene Netzfiltertypen gleich verwendet werden können.

Die Metallbasisteile weisen an einem Ende eingangsseitige Anschlüsse und an dem davon abgewandten Ende ausgangsseitige Anschlüsse auf. Jeweils ein eingangsseitiger Anschluß ist über einen Leiter elektrisch mit einem ausgangsseitigen Anschluß verbunden. Für den Fall, daß ein Netzfilter des Induktivtyps hergestellt werden soll, werden wenigstens zwei Leiter jeweils zwischen ihren eingangsseitigen Anschlüssen und den ausgangsseitigen Anschlüssen unterbrochen. Über diese geschaffene Unterbrechung hinweg können dann induktive Bauteile, wie beispielsweise Spulen, seriell verbunden werden.

Für den Fall, daß ein Netzfilter des Kapazitätstyps hergestellt werden soll, werden entsprechende Bauteile, wie beispielsweise Widerstände oder Kondensatoren zwischen einem ersten Leiter, der einen ersten eingangsseitigen Anschluß mit einem ersten ausgangsseitigen Anschluß verbindet, und einem zweiten Leiter parallel verbunden, der einen zweiten eingangsseitigen Anschluß mit einem zweiten ausgangsseitigen Anschluß verbindet. Gemäß diesen Gedanken der Erfindung kann also ein und dasselbe Metallbasisteil wahlweise zur Herstellung eines induktiven Netzfiltertyps oder eines kapazitiven Netzfiltertyps dienen. Somit lassen sich die Stückzahlen der Metallbasisteile als Gleichteile erhöhen und die Kosten senken.

Die Unterbrechung für den Fall der Herstellung eines Netzfilters des Induktivtyps kann den entsprechenden Leiter in einer Breite von wenigstens drei Millimeter auftrennen, was zur Vermeidung von Überschlägen vorteilhaft ist.

Die parallele bzw. serielle Verbindung von Bauteilen kann durch Löten oder Schweißen ausgeführt werden.

Besonders vorteilhaft ist aber hinsichtlich der Automatisierung des Verfahrens eine Verbindung von Bauteilen durch eine Schneid- und Klemmtechnik.

Dabei können in Leitern sämtlicher Metallbasisteile unmittelbar bei deren Herstellung Klemmkerben und Klemmzungen für eine Schneid- und Klemmtechnik vorgesehen werden.

Die Klemmzungen können dabei eine Stärke von etwa 0,8 Millimetern aufweisen.

Die Metallbasisteile können so ausgeführt sein, daß die eingangsseitigen Anschlüsse in einem im wesentlichen rechtwinkligen Winkel zu den ausgangsseitigen Anschlüssen ausgerichtet sind.

Der Schritt der Unterbrechung des Leiters für den Fall einer Herstellung eines Netzfilters vom induktiven Typ kann durch Stanzen eines streifenförmigen Leiters erfolgen.

Vor den Schritten der Unterbrechung bzw. Verbindung von Bauelementen können die Metallbasisteile in Gehäusen aus einem elektrisch nichtleitenden Material fixiert werden.

Dabei können identische Metallbasisteile in Gehäusen verschiedener Größe fixiert werden, wobei die Positionierung der Metallbasisteile bezüglich einer Fläche, an der die eingangsseitigen oder die ausgangsseitigen Anschlüsse angeordnet sind, unverändert bleibt. In für eine Automatisierung und Kostenersparnis günstiger Weise sind somit Netzfilter mit Gehäusen verschiedener Größe hinsichtlich eines Endabschnitts identisch, lediglich an dem von dem Anschlußbereich abgewandten Ende unterscheiden sich die Gehäuse zur Aufnahme von Filterschaltungen verschiedener Größe beispielsweise hinsichtlich ihrer Länge.

Eine Anzahl an Metallbasisteilen kann in einem Stück zusammenhängend gefertigt werden und erst vor den Montageschritten zur Anbringung der Bauteile der Filterschaltung in einzelne Metallbasisteile getrennt werden. dies verringert die Anzahl der Bauteile und senkt damit erheblich die Kosten der Produktion.

Bezugnehmend auf die Figuren der anliegenden Zeichnungen sollen nun Ausführungsbeispiele der vorliegenden Erfindung näher erläutert werden, so daß weitere Merkmale, Vorteile und Eigenschaften der Erfindung deutlicher zum Ausdruck kommen. Es zeigen:
Figur 1a) bis Figur 1d) ein Grundprinzip zur Herstellung eine Netzfilters des Induktivtyps bzw. des Kapazitätstyps anhand von vereinfachten Schaltbildern,
Figur 2 Gehäuse eines Netzfilters verschiedener Größe sowie eine besonders vorteilhafte Anordnung der eingangs- und ausgangsseitigen Anschlüsse des Netzfilters,
Figur 3 a) bis Figur 3d) verschiedene Ansichten des in Figur 2 dargestellten Netzfilters,
Figur 4 einen Ausschnitt aus Figur 3d), der in Figur 3d) durch eine Strichlinierung eingegrenzt ist,
Figur 5 eine Darstellung zur Erläuterung einer Schneid- und Klemmtechnik, wie sie bei der vorliegenden Erfindung zur Verbindung von Bauelementen an einem Leiter als Metallbasisteil Verwendung finden kann,
Figur 6 a) bis Figur 6 d) verschiedene schematische Darstellungungen einer automatisierten Schneid- und Klemmtechnik, und
Figur 7 a) bis 7c) eine Kontaktierungstechnik, bei der an Stelle der in Figuren 5 und 6 gezeigten Kerben (Schlitze) sogenannte Crimpfahnen verwendet werden.

Das Grundprinzip der vorliegenden Erfindung soll zuerst schematisch bezugnehmend auf Figuren 1a) bis 1d) erläutert werden.

Wie bereits ausgeführt kann gemäß der vorliegenden Erfindung ein und dasselbe Metallbasisteil für die Herstelllung verschiedener Netzfiltertypen, wie beispielsweise eines Netzfilters des Induktivtyps oder eine Netzfilters des Kapazitätstyps verwendet werden, wobei darüber hinaus die jeweiligen Netzfiltertypen noch hinsichtlich der genauen Anordnung und Parameter ihrer Bauteile variiert werden können.

Unter "Metallbasisteil" im Sinne der vorliegenden Beschreibung sind alle metallischen Leiter einschließlich Anschlüssen zu verstehen, die als ein Stück oder auch getrennt in ein Gehäuse eines Netzfilters montiert werden, um dann die eigentlichen Bauteile der internen Filterschaltung anzubringen.

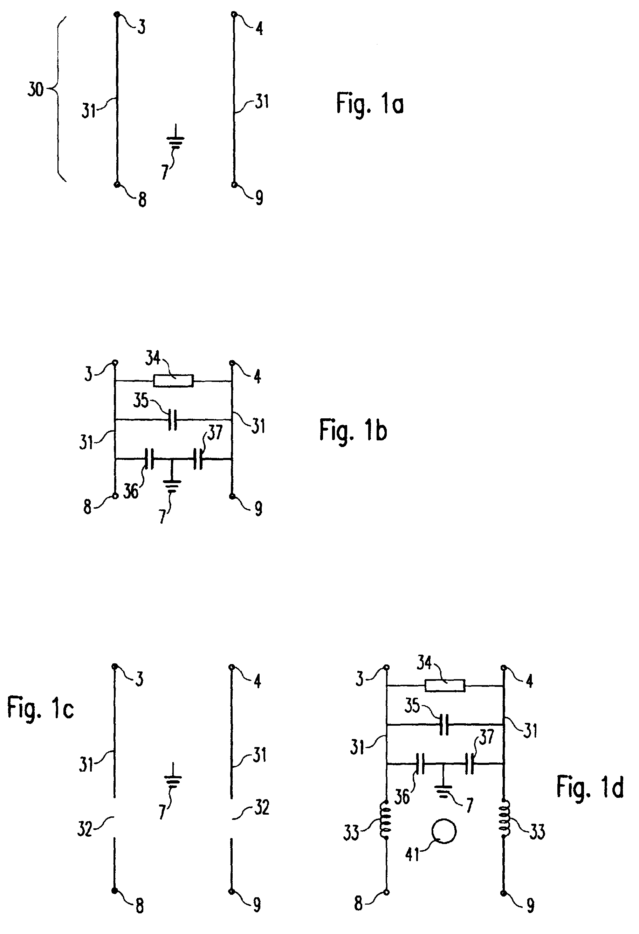

In Figur 1a) ist schematisch ein Metallbasisteil 30 dargestellt, das wenigstens zwei räumlich zueinander fixierte Leiter 31 aufweist. Jeder der Leiter weist einen eingangsseitigen Anschluß 3, 4 und einen ausgangsseitigen Anschluß 8, 9 auf. Die beiden Leiter 31 sind beispielsweise zur Verbindung mit der Phase bzw. dem Nulleiter eines anzuschließenden Netzkabels vorgesehen. Weiterhin kann in das Metallbasisteil 30 wie in Figur 1 ersichtlich ein Erdungsanschluß 7 vorgesehen sein. Der Einfachheit halber ist in Fig 1a bis Fig. 1d der Erdungsanschluß 7 nur ausgangsseitig dargestellt, wie in den übrigen Figuren ersichtlich ist, wird die Erdung üblicherweise auch an Eingang eines Netzfilters bereitgestellt, um daran die Erdungsader eines Netzkabels anzuschließen.

Wie bekannt muß für den Fall der Herstellung eines Netzfilters vom rein kapazitiven Typ, d.h. eines Netzfilters ohne jeglichen induktiven Anteil lediglich eine Parallelverbindung von Bauelementen zwischen den Leitern 31 vorgenommen werden, an denen die Phase bzw. der Nulleiter eines Netzkabels angeschlossen werden soll.

Wie in Figur 1b) gezeigt, können beispielsweise ein Widerstand 34, ein Kondensator 35, sowie eine Serienschaltung von Kondensatoren 36, 37 zwischen den beiden Leitern 31 verbunden werden, wobei der Erdungsanschluß 7 mit einer Verbindungsleitung zwischen seriell geschalteten Kondensatoren 36, 37 verbunden wird. Für den Fall, daß ein Netzfilter des rein kapazitiven Typs wie in Figur 1b) hergestellt werden soll, werden also lediglich parallele Verbindungen zwischen den einzelnen Leitern 31 des Metallbasisteils 30 geschaffen.

Figuren 1c) und 1d) erläutern schematisch den Fall, daß ausgehend von dem in Figur 1a) dargestellten Metallbasisteil 30 mit seinen Leitern 31 ein Netzfilter 1 hergestellt werden soll, das auch einen induktiven Anteil aufweist.

Wie in Figur 1c) ersichtlich werden gemäß der vorliegenden Erfindung dazu wenigstens zwei Leiter 31 des Metallbasisteils 30 jeweils zwischen ihrem eingangsseitigen Anschluß 3 bzw. 4 und ihrem ausgangsseitigen Anschluß 8, 9 unterbrochen (32). Diese Unterbrechung 32 ist vorzugsweise größer als etwa 3 Millimeter, um elektrische Durchschläge zu vermeiden. Dabei ist darauf hinzuweisen, daß das für eine Herstellung gemäß Figuren 1c) und 1d) verwendete Metallbasisteil 30 identisch mit dem Metallbasisteil ist, das für eine Herstellung gemäß 1b) (Netzfilter des kapazitiven Typs) verwendet wird, so daß identische Metallbasisteile zuerst in großer Stückzahl hergestellt und gelagen werden können und erst dann entschieden werden muß, welcher Filtertyp bzw. welche Parameter das Netzfilter aufweisen soll.

Wie in Figur 1b) gezeigt kann folgend auf die wie in Figur 1c) geschaffene Unterbrechung 32, die beispielsweise durch Stanzen erfolgen kann, die so geschaffene Unterbrechung 32 durch induktive Bauteile, wie beispielsweise Spulen 33 überbrückt werden. Durch diese Überbrückung über die Unterbrechung 32 mittels der induktiven Bauteile (Spulen 33) werden somit, wie es für einen induktiven Netzfiltertyp notwendig ist, induktive Bauteile zwischen den eingangsseitigen Anschlüssen 3, 4 und den jeweiligen ausgangsseitigen Anschlüssen 8 bzw. 9 der jeweiligen Leiter 31 geschaltet.

Selbstverständlich können darüber hinaus noch wie in Figur 1b) bereits erläutert Widerstände wie beispielsweise Widerstand 34 oder kapazitive Elemente, wie beispielsweise die Kondensatoren 35, 36, 37 parallel zwischen den beiden Leitern 31 des Metallbasisteils 30 geschaltet werden. Darüber hinaus kann im Bereich der Spulen 33 ein eisenhaltiger Spulenkern 41 angeordnet werden. Die Verbindung dieser für einen speziellen Netzfilter notwendigen Bauteile erfolgt aber, wie bereits gesagt, immer ausgehend von demselben Metallbasisteilen 30, die daher in großer Stückzahl und verhältnismäßig kostengünstig gefertigt und vorrätig gehalten werden können.

Das Metallbasisteil 30 kann beispielsweise zur Verbindung der einzelnen Bauteile und zur Ausführung der in Figur 1b) bis 1d) gezeigten Schritte räumlich fest positioniert in einem Gehäuse eines Netzfilters bereitgestellt werden.

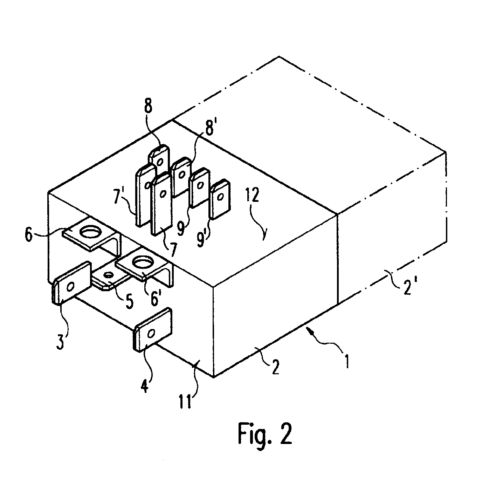

Figur 2 zeigt die Außenansicht eines erfindungsgemäßen Netzfilters. An der Stirnseite 11 des Gehäuses 2 bzw. 2' des Netzfilters sind dabei eingangsseitige Anschlüsse 3, 4, 5, 6, 6' angeordnet, die jeweils im wesentlichen in einem rechten Winkel von dieser Fläche 11 wegstehen. Dabei kann der Anschluß 3 beispielsweise zum Anschluß einer Phase eines Netzkabels, der Anschluß 4 zum Anschluß eines Nulleiters eines Netzkabels sowie die Anschlüsse 5, 6, 6' als Erdungsanschlüsse vorgesehen sein. Ausgangsseitige Anschlüsse 7, 7', 8, 8', 9, 9' sind auf einer Fläche 12 senkrecht von dieser wegstehend angeordnet, wobei die Fläche 12 im wesentlichen einen rechten Winkel zu der Fläche 11 bildet, auf der die eingangsseitigen Anschlüsse 3, 4, 5, 6, 6' angeordnet sind. Die Anschlüsse 8, 8' sind dabei für einen Anschluß einer Phasenleitung, die Anschlüsse 9, 9' für den Anschluß eines Nulleiters und die Anschlüsse 7, 7' für den Anschluß eines Erdungsleiters vorgesehen.

Somit bilden die eingangsseitigen Anschlüsse 3, 4, 5, 6, 6' im wesentlichen einen rechten Winkel zu der Ausrichtung der ausgangsseitigen Anschlüsse 7, 7', 8, 8' und 9, 9'.

Selbstverständlich können verschiedene Netzfiltertypen verursacht durch verschiedene interne Filterschaltungen einen unterschiedlichen Platzbedarf aufweisen, so daß verschieden große Gehäuse 2, 2' für die Netzfilter bereitgestellt werden müssen.

Gemäß der vorliegenden Erfindung werden die eingangsseitigen und die ausgangsseitigen Anschlüsse und somit auch das Metallbasisteil bezüglich einem Endbereich des Netzfilters 1 unabhängig von der Größe des verwendeten Gehäuses 2, 2' immer gleich positioniert, was die Automatisierung der Herstellung sowie der weiteren Verwendung des Netzfilters 1 wesentlich erleichtert. Wenn also ein Netzfilter 1 hergestellt werden soll, das eine interne Filterschaltung aufweist, die einen Platzbedarf hat, der den vorhandenen Raum in dem Gehäuse 2 (durchgezogene Linien in Figur 2) übersteigt, so wird der Endbereich des Gehäuses des Netzfilters 1, an dem das Metallbasisteil 30 mit den eingangs- und ausgangsseitigen Anschlüssen vorgesehen ist, unverändert beibehalten, lediglich in dem davon abgewandten Endbereich wird das Gehäuse 2' sozusagen nach hinten verlängert, um Platz für die Bauteile der internen Filterschaltung zu schaffen (in Figur 2 durch eine Strichlinierung dargestellt und mit dem Bezugszeichen 2' versehen).

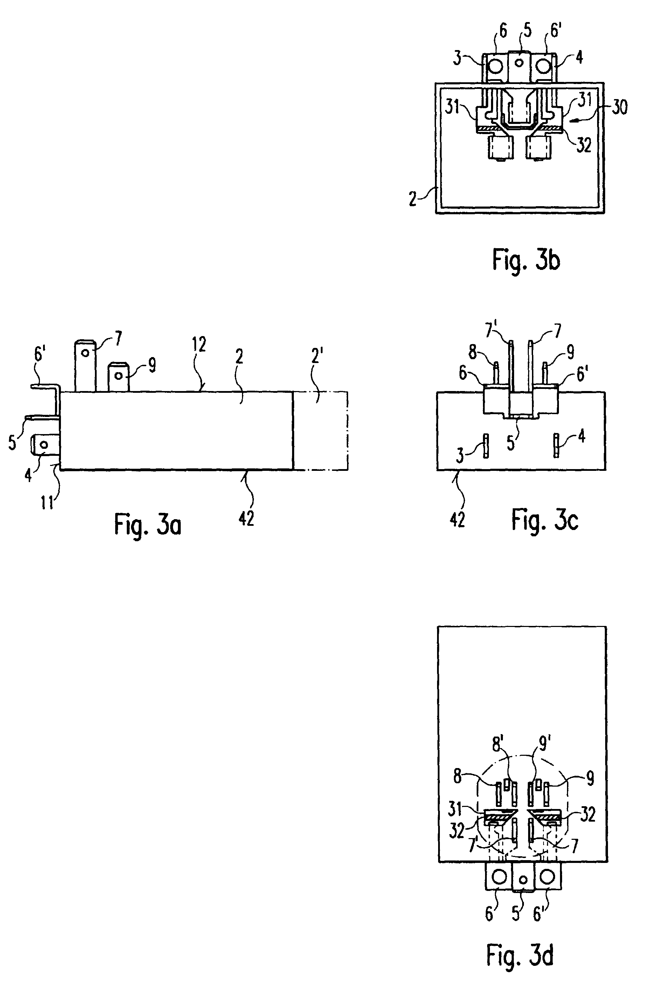

Figur 3a) bis Figur 3d) zeigen in verschiedenen Ansichten insbesondere den Aufbau eines Metallbasisteils 30, das zur Herstellung eines Netzfilters mit der in der Figur 2 dargestellten äußeren Konfiguration verwendet werden kann.

Das Metallbasisteil 30 gemäß Figur 3 wird also in dem entsprechenden Gehäuse 2 fest angebracht, wobei vor der Anbringung der eigentlichen Filterschaltung beispielsweise sämtliche Flächen des Gehäuses 2, 2' des Netzfilters 1 mit Ausnahme der Unterseite 42 bereits geschlossen sind. Somit kann das Metallbasisteil mit den eingangs- und ausgangsseitigen Anschlüssen fest montiert in dem Gehäuse 2, 2' für die eigentliche Anbringung der internen Filterschaltung des Netzfilters bereitgestellt werden. Die Lage der eingangsseitigen und ausgangsseitigen Anschlüsse bezüglich des Gehäuses 2 ist also zu diesem Zeitpunkt bereits einheitlich festgelegt, was die automatisierte Anbringung der Bauteile der internen Filterschaltung erleichtert. Die Bauteile der internen Filterschaltung können dann von der in diesem Zustand noch offenen Unterseite 42 her eingebaut werden.

In Figur 3b) und Figur 3d) sind schraffiert die Bereiche dargestellt und mit dem Bezugszeichen 32 versehen, die beispielsweise durch Stanzung zur Bildung der genannten Unterbrechung entfernt werden, wenn ein Netzfilter des Induktivtyps hergestellt werden soll und daher induktive Bauteile im Sinne einer seriellen Verbindung diese Unterbrechung 32 überbrücken sollen.

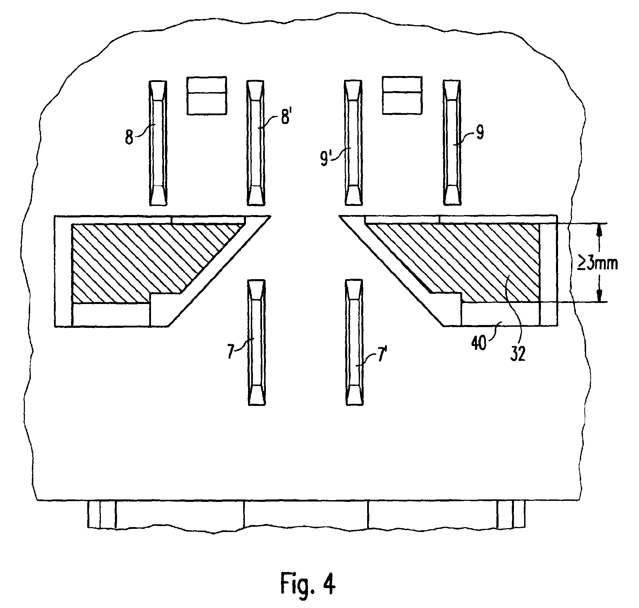

Figur 4 zeigt einen Ausschnitt aus Figur 3d), der in Figur 3d)' strichliniert eingegrenzt ist. In Figur 4 ist der Bereich der ausgangsseitigen Anschlüsse 7, 7', 8, 8' und 9, 9' des Metallbasisteils vergrößert und im Detail dargestellt. In der Ansicht gemäß Figur 4 stehen diese ausgangsseitigen Anschlüsse 7, 7', 8, 8', 9, 9' sozusagen aus der Ebene der Zeichnungen heraus. In dem Metallbasisteil werden die Anschlüsse 8, 8' bzw. 9, 9' in Form eines streifenförmigen Leiters 40. der in der Ansicht gemäß Figur 4 in der Ebene der Zeichnung liegt, in Richtung der eingangsseitigen Anschlüsse des Metallbasisteils weitergeführt, die in dem Ausschnitt gemäß Figur 4 nicht zu sehen sind.

In Figur 4 ist wiederum der Bereich 32, der zur Schaffung eines Netzfilters des Induktivtyps beispielsweise herausgestanzt wird, schraffiert dargestellt.

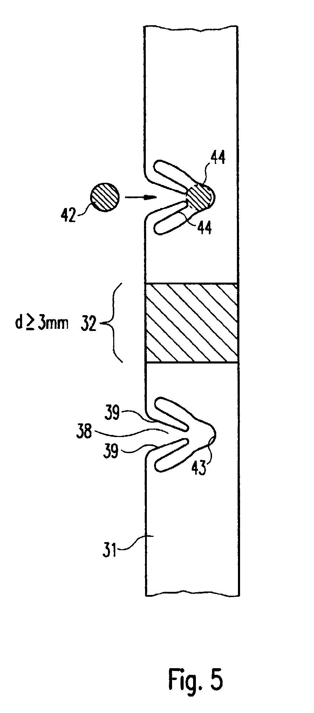

Wie bereits ausgeführt, werden nach der Bereitstellung des Metallbasisteils mit seinen eingangs- und ausgangsseitigen Anschlüssen in dem Gehäuse 2 zur Anbringung der internen Filterschaltung verschiedenartige Bauelemente seriell und/oder parallel mit Leitern 31 des Metallbasisteils 30 verbunden. Diese Verbindung kann wie aus dem Stand der Technik gut bekannt beispielsweise durch Löten oder Schweißen erfolgen. Im Sinne einer weiteren Kostenersparnis und zu einer Erleichterung der Automatisierung kann indessen gemäß der vorliegenden Erfindung auch eine Schneid- und Klemmtechnik verwendet werden, wie sie in Figur 5 dargestellt ist.

In Figur 5 ist eine Ausschnitt eines beliebigen Leiters 31 des Metallbasisteils 30 im Bereich einer ggf. zu schaffenden Unterbrechung 32 dargestellt. Beispielsweise werden in sämtlichen Metallbasisteilen 30, unabhängig davon ob sie später zur Schaffung eines Netzfilters vom Induktivtyp oder eines Netzfilters vom Kapazitätstyp Verwendung finden sollen, vor der Anbringung der internen Filterschaltung, wie es in Figuren 1b) und 1d) schematisch dargestellt ist, vorbereitende Maßnahmen für eine Schneid- und Klemmtechnik getroffen. Dazu werden an beliebiger Stelle an einem Leiter 31 des Metallbasisteils 30 Kerben 38 geschaffen (beispielsweise gestanzt), an deren beiden Seiten sich jeweils federelastische Klemmzungen 39 befinden. Diese Kerben 38 und Klemmzungen 39 können an verschiedenen Stellen des Metallbasisteils 30 vorgesehen werden, unabhängig davon, ob sie später tatsächlich für eine Kontaktierung benutzt werden.

Wenn ein Anschlußdraht 42 eines beliebigen Bauteils mit dem Leiter 31 im Bereich einer Kerbe 38 verbunden werden soll, wird dieser Verbindungsdraht 42 im wesentlichen senkrecht zu der Erstreckung des streifenförmigen Leiters 31 in die Kerbe 38 eingeführt, so daß die Klemmzungen 39 diesen Verbindungsdraht 42 sicher festhalten, wenn sich der Verbindungsdraht 42 im Bereich des Grunds 43 der Kerbe 38 befindet. Durch die somit geschaffene Klemmverbindung zwischen dem Verbindungsdraht 42 eines beliebigen Bauteils und dem Leiter 31 ist eine sichere und einfach herzustellende elektrische Verbindung zwischen den einzelnen Bauteilen gewährleistet.

Die Klemmzungen 39 können bspw. eine Stärke von etwa 0,8 mm aufweisen und mit einem Krümmungsradius von etwa 0,5 mm federelastisch mit dem Hauptkörper des Streifenleiters verbunden sein. Durch entsprechendes Prägen der Klemmkanten 44 der Kerben 38 wird bei der Herstellung eine Schneide erzeugt, die im Zuge des Verbindungsvorgangs in den Verbindungsdraht 42 des zu kontaktierenden Bauteils eindringt und somit eine dauerhafte, gasdichte Verbindung schafft.

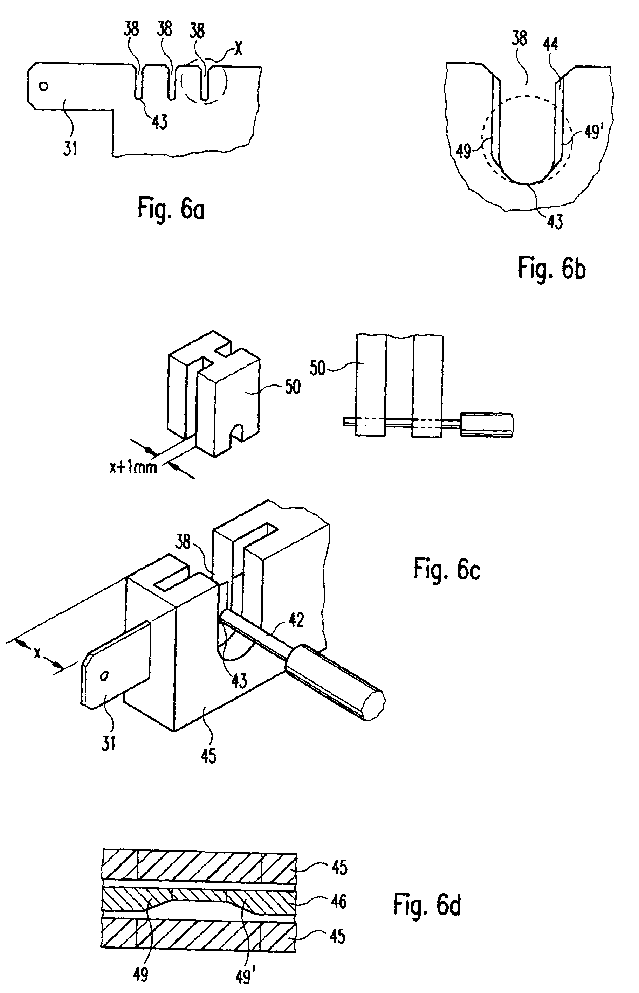

In Figuren 6 a) bis 6d) sind verschiedene Ansichten einer Schneid- und Klemmtechnik zu sehen, die ohne Klemmzungen (39 in Figur 5) auskommt. In Figur 6a) ist ein Leiter 31 mit einer Anzahl an Kerben (Schlitzen) 38 versehen ist. Wie in Figur 6b), die eine Detailansicht von Figur 6a) im Bereich einer Kerbe 38 ist, gezeigt ist, ist die Breite der Kerben 38 in diesem Fall etwas kleiner als der Durchmesser des Verbindungsdrahts 43 des zu kontakierenden Bauteils. Wie in Figur 6b) ebenfalss gezeigt sind die beiden Seitenflächen 49, 49' jeweils in Zuge ihrer Fertigung bspw. durch entsprechendes Prägen schneidenartig ausgebildet.

Figur 6c) zeigt, wie eine Schneid- und Klemmtechnik automatisiert ausgeführt werden kann. Dabei wird der Verbindungsdraht 42 des zu kontaktierenden Bauteils durch ein Werkzeug 50 von oben in die Kerbe 38 eingezwängt, wodurch der Verbindungsdraht 42 durch die schneidenartigen Seitenflächen 49, 49' eingeklemmt und schließlich im Bereich des Grunds 43 der Kerben 38 abgeschnitten wird.

Figur 6d) zeigt eine Schnittansicht eines Leiters 31 im Bereich einer Kerbe 38. Wie in dieser Figur gezeigt, kann der Leiter 31 für den Verbindungsvorgang in einem Kunststoffteil 45 gehalten sein, um insbesondere die Schneiden des metallischen Stanzteils 46, das den Leiter bildet, während des Verbindungsvorgangs zu halten. Der metallische Leiter 31 wird dazu in ein entsprechendes Kunststoffteil 45 gelegt, wie auch in Figur 6c) ersichtlich ist. In Figur 6d) ist darüber hinaus gut die Schneidenform der Seitenflächen 49, 49' einer Kerbe 38 ersichtlich.

Die Kerben (Schlitze) 38 zur Aufnahme von Verbindungsdrähten von Bauteilen zeigen vorzugsweise nach oben, um eine Automatisierung des Kontaktierungsvorgnags zu erleichtern, wie in Figur 6 gezeigt ist.

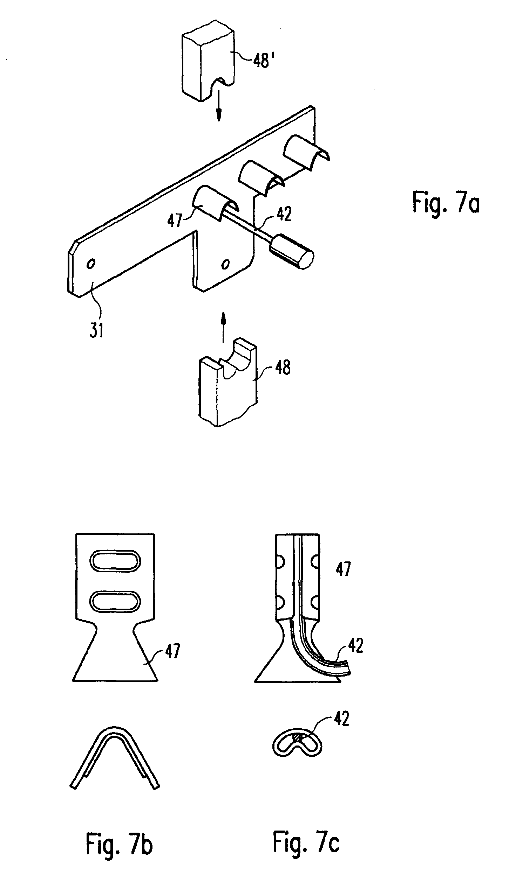

Anstatt der schlitzartigen Kerben 38 können auch Crimpfahnen verwendet werden, die um Verbindungsdrähte (Leiterenden) der zu kontaktierenden Bauteile geschlungen werden, wie schematisch in Figuren 7a) bis 7c) zu sehen ist.

Figur 7a) zeigt schematisch eine Leiter 31, von dem mehrere Crimpfahnen 47 wegstehen, sowie ein Werkzeug 48, 48' zum Schließen von Crimpfahnen und ein Werkzeug 50 zum Positionieren eines Verbindungsdrahts 42 im Bereich einer offenen Crimpfahne 47.

Figuren 7b) bzw. 7c) zeigen jeweils eine Seitenansicht und eine Aufsicht einer offenen bzw. einer um einen Verbindungsdraht 42 geschlungenen Crimpfahne 47, wobei die Crimpfahne 47 im geschlossenen, zusamengequetschten Zustand etwas in den Verbindungsdraht 42 eindringt, um eine sichere Verbindung zu schaffen.

Die Metallbasisteile können als ein einziges Stanzteil gefertigt werden, das also einstückig die Leiter für Phase, Nulleiter und Erdung aufweist. Pro herzustellenden Netzfilter wird also nur ein Metallstanzteil benötigt und montiert. Dieses einstückige Stanzteil kann dann mit dem jeweiligen Gehäuse montiert werden, so daß für diese Montage lediglich zwei Teile erforderlich sind. Erst nach dieser Montage werden dann die einzelnen Leiter des Metallbasisteils getrennt, so daß sie elektrisch gegeneinander isoliert sind. Dadurch, daß bei der Montage eines Metallbasisteils in einem Gehäuse gemäß dieser Technik nur zwei Teile montiert werden, da die einzelnen Leiter des Metallbasisteils zum Zeitpunkt der Montage noch nicht voneinander getrennt sind, sinken natürlich der Aufwand und die Kosten der Produktion.

Eine Anzahl an Metallbasisteilen kann in einem Stück zusammenhängend gefertigt werden und erst vor den Montageschritten zur Anbringung der Bauteile der Filterschaltung bzw. der Montage der Metallbasisteile in die entsprechenden Gehäuse in einzelne Metallbasisteile getrennt werden. Dies verringert die Anzahl der Bauteile und senkt damit erheblich die Kosten der Produktion.

## Patentansprüche

1. Verfahren zur Herstellung von Netzfiltern (1), aufweisend die folgenden Schritte:
a.) Herstellung von Metallbasisteilen (30), die zur Herstellung von wenigstens einem kapazitiven und einem induktiven Netzfiltertyp (1) verwendet werden und jeweils an einem Ende eingangsseitige Anschlüsse (3, 4) und an dem davon abgewandten Ende ausgangsseitige Anschlüsse (8, 9) aufweisen, wobei jeweils ein eingangsseitiger Anschluß (3, 4) mit einem ausgangsseitigen Anschluß (8, 9) über einen Leiter (31) elektrisch verbunden ist, und
b.) für den Fall, daß ein Netzfilter (1) des Induktiv-Typs hergestellt werden soll:
b1.) Unterbrechen (32) wenigstens zweier Leiter (31) eines Metallbasisteils (30) jeweils zwischen ihren eingangsseitigen Anschlüssen (3, 4) und ausgangsseitigen Anschlüssen (8, 9) und
b2.) serielle Verbindung von induktiven Bauteilen (33) zur Überbrückung der Unterbrechung (32),
c.) für den Fall, daß ein Netzfilter (1) des Kapazitäts-Typs hergestellt werden soll: parallele Verbindung von Bauteilen (34, 35, 36, 37) zwischen einem ersten Leiter (31), der einen ersten eingangsseitigen Anschluß (3) mit einem ersten ausgangsseitigen Anschluß (8) verbindet, und einem zweiten Leiter (31), der einen zweiten eingangs-seitigen Anschluß (4) mit einem zweiten ausgangsseitigen Anschluß (9) verbindet.

2. Verfahren nach Anspruch 1,
dadurch gekennzeichnet,
daß die Unterbrechung (32) in dem Schritt b1.) den entsprechenden Leiter (31) in einer Breite von wenigstens 3 mm auftrennt.

3. Verfahren nach einem der vorhergehenden Ansprüche,
dadurch gekennzeichnet,
daß der Schritt b2.) bzw. c.) der Verbindung von Bauteilen (33; 34, 35, 36, 37) durch Löten oder Schweißen ausgeführt wird.

4. Verfahren nach einem der Ansprüche 1 oder 2,
dadurch gekennzeichnet,
daß der Schritt b2.) bzw. c.) der Verbindung von Bauteilen (33; 34, 35, 36, 37) durch eine Schneid- und Klemmtechnik erfolgt.

5. Verfahren nach Anspruch 4,
dadurch gekennzeichnet,
daß in Leitern (31) sämtlicher Metallbasisteile (30) unmittelbar bei dem Schritt a.) Kerben (38) für eine Schneid- und Klemmtechnik vorgesehen werden.

6. Verfahren nach Anspruch 5,
dadurch gekennzeichnet,
daß im Bereich der Kerben (38) Klemmzungen (39) vorgesehen werden.

7. Verfahren nach Anspruch 6,
dadurch gekennzeichet,
daß die Klemmzungen (39) eine Stärke von etwa 0,8 mm aufweisen.

8. Verfahren nach einem der Ansprüche 5 bis 7,
dadurch gekennzeichnet,
daß die Seitenflächen der Kerben (39) als Schneiden (49) ausgebildet werden.

9. Verfahren nach einem der Ansprüche 5 bis 8,
dadurch gekennzeichnet,
daß die Breite der Kerben (38) größer ist als der Durchmesser der Verbindungsdrähte (42) der zu kontaktierenden Bauteile.

10. Verfahren einem der Ansprüchen 5 bis 9,
dadurch gekennzeichnet,
daß die Verbindungsdrähte (42) in einem Zustand in die Kerben (38) eingeführt werden, in dem diese nach oben gerichtet sind.

11. Verfahren nach einem der Ansprüche 1 bis 4,
dadurch gekennzeichnet,
daß die Verbindung zwischen dem Leiter (31) und Verbindungsdrähten (42) zu kontaktierender Bauteile mittels Crimp-Verbindern (47) erfolgt.

12. Verfahren nach einem der vorhergehenden Ansprüche,
dadurch gekennzeichnet,
daß die eingangsseitigen Anschlüsse (3, 4) in einem im wesentlichen rechtwinkligen Winkel zu den ausgangsseitigen Anschlüssen (8, 9) ausgerichtet werden.

13. Verfahren nach einem der vorhergehenden Ansprüche,
dadurch gekennzeichnet,
daß der Schritt b1.) der Unterbrechung (32) durch Stanzen eines streifenförmigen Leiters (40) erfolgt.

14. Verfahren nach einem der vorhergehenden Ansprüche,
dadurch gekennzeichnet,
daß vor den Schritten b.) bzw. c.) die Metallbasisteile (30) in Gehäusen (2) aus einem elektrisch nicht leitenden Material fixiert werden.

15. Verfahren nach Anspruch 14,
dadurch gekennzeichnet,
daß identische Metallbasisteile (30) in Gehäusen (2, 2') verschiedener Größe fixiert werden, wobei die Positionierung der Metallbasisteile (30) bezüglich einer Fläche (11), an der die eingangsseitigen (3, 4, 5, 6) oder die ausgangsseitigen (7, 8, 9) Anschlüsse angeordnet sind, unverändert bleibt.

16. Verfahren nach einem der vorhergehenden Ansprüche,
dadurch gekennzeichnet,
daß eine Anzahl an Metallbasisteilen (30) in einem Stück zusammenhängend gefertigt werden und erst vor dem Schritt b.) bzw. c.) in einzelne Metallbasisteile (30) getrennt werden.
